# EUROPÄISCHE PATENTANMELDUNG

(11) **EP 3 211 628 A1**
(43) Veröffentlichungstag der Anmeldung: **30.08.2017**
(21) Anmeldenummer: 17156534.4
(22) Anmeldetag: 16.02.2017
(51) Int. Cl.: G09F 13/20, B60Q 7/00

(54) **WARNDREIECK**

(30) Priorität: 26.02.2016 DE 202016101032 U
(71) Anmelder: Büchel Industriebeteiligungen GmbH, 36039 Fulda (DE)
(72) Erfinder: Büchel, Erhard, 36043 Fulda (DE)
(74) Vertreter: Sawodny, Michael-Wolfgang

(57) **Zusammenfassung**

Die Erfindung betrifft ein Warndreieck mit einem Rahmen, der einen horizontalen Schenkel (4) und zwei aufrechte Schenkel (6,8) die mit einem Ende an den Enden des horizontalen Schenkels (4) angeordnet sind und im aufgestellten Zustand an ihren anderen Enden miteinander verbunden sind, wobei die Schenkel (4,6,8) vorderseitige Oberflächen und rückseitige Oberflächen haben und wobei die Schenkel (4,6,8) wenigsten an ihren vorderseitigen Oberflächen reflektierend ausgebildet sind.

Die Erfindung ist dadurch gekennzeichnet, dass wenigstens auf den vorderseitigen Oberflächen der Schenkel (4,6,8) des Warndreiecks eine rotreflektierende Fluoreszenzfolie aufgebracht ist.

## Beschreibung

Die Erfindung betrifft ein Warndreieck wie es als Zubehör für Kraftfahrzeuge vorgeschrieben ist.

Derartige Warndreiecke haben einen Rahmen, der einen horizontalen Schenkel und zwei aufrechte Schenkel, die mit einem Ende an den Enden des horizontalen Schenkels angeordnet sind und im aufgestellten Zustand an ihren anderen Enden miteinander verbunden sind, wobei der horizontale Schenkel eine vorderseitige Oberfläche, eine rückseitige Oberfläche und eine oberseitige Oberfläche und die aufrechten Schenkel eine vorderseitige Oberfläche, eine rückseitige Oberfläche und eine außenseitige Oberfläche haben, wobei die Schenkel wenigstens an ihren vorderseitigen Oberflächen reflektierend ausgebildet sind, sowie eine fluoreszierende, dreieckige Folie, die an ihren Enden an den Eckpunkten des Rahmens befestigt ist und ein inneres Dreieck des Warndreiecks bildet.

Der Erfindung liegt die Aufgabe zu Grunde, ein Warndreieck bereitzustellen, das bei einfacherer Anordnung sowohl die reflektierende als auch die fluoreszierende Funktion erfüllen kann, wie es in den der europäischen Regelung ECE-R 27 gefordert wird.

Dazu ist das erfindungsgemäße Warndreieck der eingangs genannten Art dadurch gekennzeichnet, dass wenigstens auf den vorderseitigen Oberflächen der Schenkel des Warndreieckes eine rot-reflektierende Fluoreszenzfolie aufgebracht ist. Ein derartiges Warndreieck erfüllt nicht nur die europäische Regelung ECE-R 27 sondern kommt auch mit weniger Teilen aus, weil die bisher vorgesehene Folie, die zwischen den Schenkeln des Warndreieckes vorhanden war, wegfallen kann, da die sowohl rot-reflektierende als auch eine Fluoreszenzfolie die Funktion der früheren Dreiecksfolie übernehmen kann.

Eine vorteilhafte Ausgestaltung des erfindungsgemäßen Warndreieckes ist dadurch gekennzeichnet, dass sowohl auf den vorderseitigen als auch den rückseitigen Oberflächen der Schenkel des Warndreiecks die sowohl rot-reflektierende Fluoreszenzfolie aufgebracht ist. Dadurch wird die Wahrnehmbarkeit bei schlechten Sichtverhältnissen, beispielsweise bei Nacht, verbessert. Dadurch ist das Warndreieck in vorteilhafter Weise für Verkehrsteilnehmer, die von beiden Seiten her auf das Warndreieck zufahren, gut zu erkennen. Aufgrund der Verwendung der reflektierenden Fluoreszenzfolie auf den Schenkeln kann dieser Vorteil auf einfachste Weise erreicht werden.

Eine weitere vorteilhafte Ausgestaltung des erfindungsgemäßen Warndreieckes ist dadurch gekennzeichnet, dass eine oberseitige Oberfläche und/oder eine unterseitige Oberfläche des horizontalen Schenkels mit der rot-reflektierenden Fluoreszenzfolie versehen sind. Damit wird in vorteilhafter Weise erreicht, dass das Warndreieck nicht nur von der Vorderseite und Rückseite her sondern auch dann gut erkennbar ist, wenn die Blickrichtung eines Beobachters des Warndreiecks unter einem Winkel zu der Senkrechten auf der Vorderseite und Rückseite steht.

Eine weitere vorteilhafte Ausgestaltung des erfindungsgemäßen Warndreiecks ist dadurch gekennzeichnet, dass oberseitige Oberfläche und/oder eine unterseitige Oberfläche der horizontalen Schenkel als konkave oder konvexe Flächen ausgebildet ist/sind. Durch diese Ausgestaltung der oberseitigen und/oder unterseitigen Oberfläche wird das Warndreieck in vorteilhafter Weise aus einem beliebigen Winkel zwischen 0° und 360° in Bezug auf eine Ebene des Warndreiecks, in der die Schenkel liegen sichtbar.

Eine weitere vorteilhafte Ausgestaltung des erfindungsgemäßen Warndreiecks ist dadurch gekennzeichnet, dass die außenseitige Oberflächen und/oder die innenseitigen Oberflächen der aufrechten Schenkel mit der rot-reflektierenden Fluoreszenzfolie versehen sind. Durch diese Ausgestaltung der äußeren und/oder inneren Oberflächen der aufrechten Schenkel wird das Ergebnis mit den oben beschriebenen Ausgestaltungen des horizontalen Schenkels noch erhöht.

Eine weitere vorteilhafte Ausgestaltung des erfindungsgemäßen Warndreiecks ist dadurch gekennzeichnet, dass die außenseitigen Oberflächen und/oder die innenseitigen Oberflächen der aufrechten Schenkel als konkave oder konvexe Flächen ausgebildet sind. Durch diese Ausgestaltung der außenseitigen und/oder innenseitigen Oberflächen der aufrechten Schenkel ergibt sich eine noch bessere Rundum-Erkennbarkeit des Warndreiecks.

Eine weitere vorteilhafte Ausgestaltung des erfindungsgemäßen Warndreiecks ist dadurch gekennzeichnet, dass die rot-reflektierenden Fluoreszenzfolie eine Vielzahl von lichtreflektierenden Elementen umfasst, die in eine Reflexionsschicht eingebettet sind. Dadurch wird in vorteilhafter Weise eine flächendeckende lichtreflektierende Schicht geschaffen.

Eine weitere vorteilhafte Ausgestaltung des erfindungsgemäßen Warndreiecks ist dadurch gekennzeichnet, dass die lichtreflektierenden Elemente verspiegelte Pyramiden sind, wodurch die lichtreflektierende Eigenschaft der lichtreflektierenden Schicht in vorteilhafter Weise die Vorschriften für die Rückstrahler-Flächen von Warndreiecken mehr als erfüllen kann.

Eine weitere vorteilhafte Ausgestaltung des erfindungsgemäßen Warndreiecks ist dadurch gekennzeichnet, dass die rot-reflektierende Fluoreszenzfolie eine transparente rote Deckschicht aufweist, wodurch die auf der rot-reflektierenden Fluoreszenzfolie auftreffende Strahlung als rotes Licht aus der rot-reflektierenden Fluoreszenzfolie austritt.

Als rot-reflektierende Fluoreszenzfolie kann beispielsweise ohne Beschränkung hierauf eine reflektierende Folie der 3M Deutschland GmbH, Carl-Schurz-Straße 1, 41453 Neuss, verwandt werden. Besonders bevorzugt ist als reflektierende Folie eine Folie 3M™ Diamond Grade™ DG³ Serie 4090, insbesondere die fluoreszierende orange Folie 4084 der 3M Deutschland GmbH aus der Serie 4090, die aufgrund ihrer fluoreszierenden Eigenschaften eine sehr gute Tagessichtbarkeit besitzt. Bei den 3M™ Diamond Grade™ DG³ reflektierende Folien Serie 4090 handelt es sich um witterungsbeständige, retroreflektierende Folien nach DIN 67520, Retroreflexions-Klasse RA3, Reflexfolien-Aufbau C, die auf der Rückseite mit einem Selbstkleber beschichtet sind. Des Weiteren erfüllen die 3M™ Diamond Grade™ DG³ Reflexfolien Serie 4090 die DIN 6171, Teil 1, Ausgabe 2003 (Aufsichtfarben für Verkehrszeichen) und die DIN 67520 (Lichttechnische Mindestanforderungen an Reflexstoffe mikroprismatischer Materialien).

Die Folien können mit Gummihandroller oder einer Druckwalzen-Verklebemaschine mit einem Anpressdruck von 5 bis 6 bar auf einen Untergrund aufgebracht werden.

Bei den Folien 3M™ Diamond Grade™ DG³ Serie 4090 handelt es sich um mikroprismatische Materialien, d.h. Folien mit Mikroprismen Optik. Die Folien weisen Rückstrahlwerte R_{A} in [cd/l x m²] von 1000 bei einem Beobachtungswinkel von 0,1° und 45 bei einem Beobachtungswinkel von 1,5° auf.

Als Untergrund ist neben Metallen wie Aluminium auch eine Verklebung der Folie mit Kunststoffen möglich.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
Fig. 1 eine Vorderansicht eines Warndreiecks nach einem Ausführungsbeispiel der Erfindung;
Fig. 2 eine vorderseitige Ansicht des horizontalen Schenkels des Warndreiecks mit einer Basis;
Fig. 3 eine Draufsicht auf den horizontalen Schenkel und die Basis;
Fig. 4A ein Schnitt durch den horizontalen Schenkel entlang der Linie III-III von Fig. 3;
Fig. 4B ein Schnitt analog Fig. 4A durch den horizontalen Schenkel nach einem alternativen Ausführungsbeispiel der Erfindung;
Fig. 5 eine vorderseitige Ansicht eines aufrechten Schenkels des Warndreiecks;
Fig. 6 eine Seitenansicht eines aufrechten Schenkels von Fig. 5;
Fig. 7A ein Schnitt durch den aufrechten Schenkel der Linie V-V von Fig. 5;
Fig. 7B ein Schnitt analog zu Fig. 7A durch den horizontalen Schenkel nach einem alternativen Ausführungsbeispiel der Erfindung;
Fig. 8 eine schematische Darstellung des Schichtaufbaus der rot-reflektierenden Fluoreszenzfolie, die in dem Warndreieck nach Fig. 1 verwendet wird.

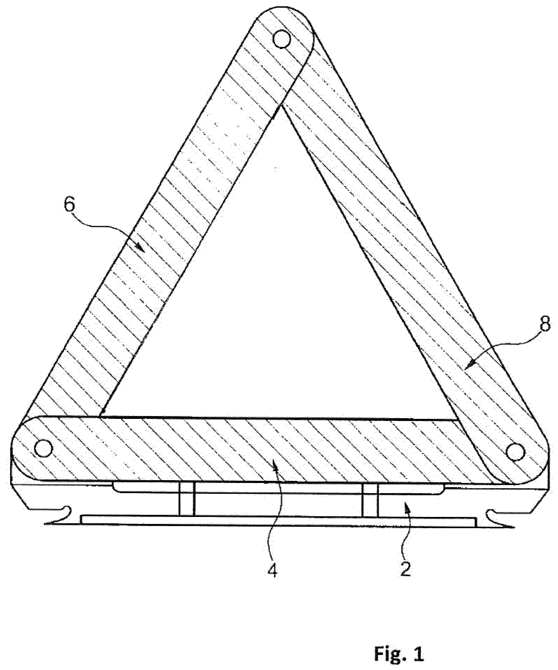

Fig. 1 zeigt ein Warndreieck mit einer Basis **2,** einem horizontalen Schenkel **4** und zwei aufrechten Schenkel **6, 8,** die mit einem Ende an den Enden des horizontalen Schenkels **4** schwenkbar angeordnet sind. Im aufgestellten Zustand sind die aufrechten Schenkel **6, 8** an ihren anderen Enden miteinander verbunden.

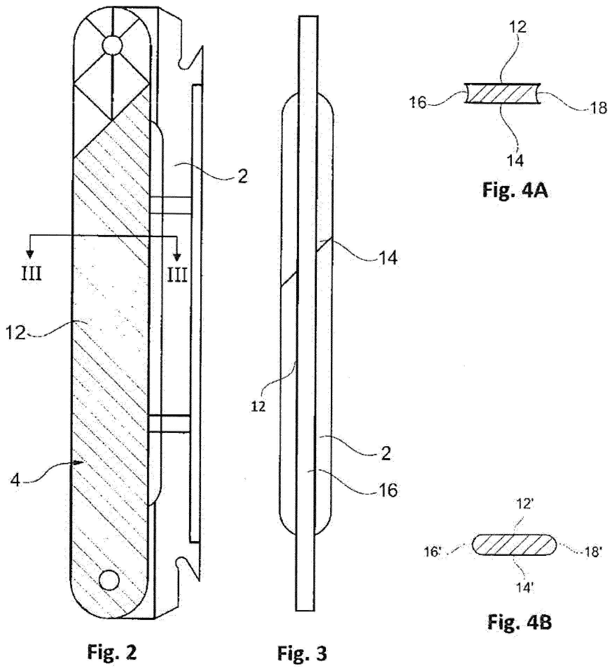

Wie in den Fig. 2 und Fig. 3 gezeigt ist, hat der horizontale Schenkel **4** des Warndreiecks eine vorderseitige Oberfläche **12,** eine rückseitige Oberfläche **14,** eine oberseitige Oberfläche **16** und eine unterseitige Oberfläche **18.** Wie in Fig. 4A gezeigt ist, die einen Schnitt durch den horizontalen Schenkel **4** entlang der Linie III-III von Fig.3 darstellt, sind die oberseitige Oberfläche **16** und die unterseitige Oberfläche **18** des horizontalen Schenkels **4** konkav ausgebildet.

Fig. 4B ist ein Schnitt analog zu Fig. 4A durch einen horizontalen Schenkel nach einem alternativen Ausführungsbeispiel der Erfindung, wobei die oberseitige Oberfläche **16'** und die unterseitige Oberfläche **18'** des horizontalen Schenkels **4'** konvex ausgebildet sind.

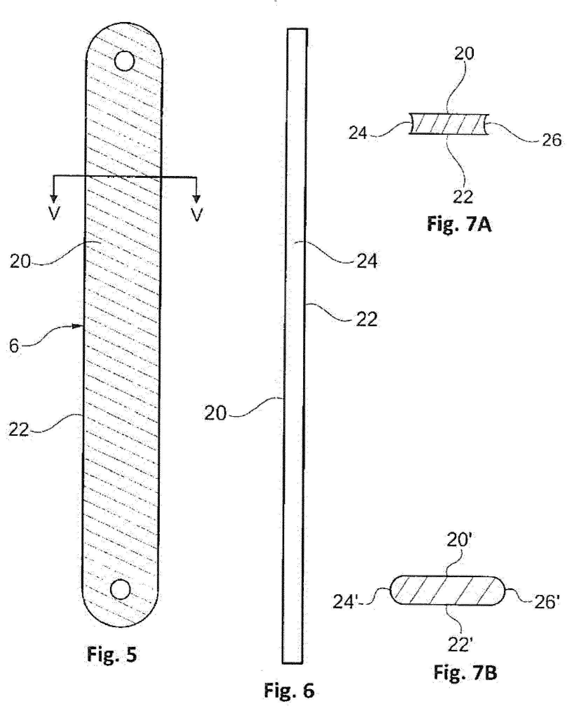

Wie in den Fig. 5 und Fig. 6 gezeigt ist, haben die aufrechten Schenkel **6, 8** des Warndreiecks eine vorderseitige Oberfläche **20,** eine rückseitige Oberfläche **22** und eine außenseitige Oberfläche **24** und eine innenseitige Oberfläche **26.** Wie in Fig. 7A gezeigt ist, die einen Schnitt durch einen aufrechten Schenkel **4** entlang der Linie VI-VI von Fig. 6 darstellt, die außenseitige Oberfläche **24** des horizontalen Schenkels **4** konkav ausgebildet.

Fig. 7B ist ein Schnitt analog zu Fig. 7A durch einen aufrechten Schenkel nach einem alternativen Ausführungsbeispiel der Erfindung, wobei die außenseitige Oberfläche **24'** und die innenseitige Oberfläche **26**' des horizontalen Schenkels **4'** konvex ausgebildet ist. Der aufrechte Schenkel hat eine vorderseitige Oberfläche **20'** und eine rückseitige Oberfläche **22'.**

Bei allen vorstehend beschriebenen Schenkeln **4, 6, 8** ist sowohl auf den vorderseitigen Oberflächen **12, 20** als auch auf den rückseitigen Oberflächen **14, 22** der Schenkel des Warndreiecks eine rot-reflektierende Fluoreszenzfolie aufgebracht. Die oberseitige Oberfläche **16** des horizontalen Schenkels **4** sowie die außenseitigen Oberflächen und die innenseitigen Oberflächen der aufrechten Schenkel **6, 8** des Warndreiecks sind ebenfalls mit der rot-reflektierenden Fluoreszenzfolie versehen.

Als rot-reflektierende Fluoreszenzfolie kann beispielsweise ohne Beschränkung hierauf eine reflektierende Folie der 3M Deutschland GmbH, Carl-Schurz-Straße 1, 41453 Neuss, verwandt werden. Besonders bevorzugt ist die reflektierende Folie eine Folie 3M™ Diamond Grade™ DG³ Serie 4090, insbesondere die fluoreszierende orange Folie 4084 der 3M Deutschland GmbH aus der Serie 4090, die aufgrund ihrer fluoreszierenden Eigenschaften eine sehr gute Tagessichtbarkeit besitzt. Bei den 3M™ Diamond Grade™ DG³ reflektierende Folien Serie 4090 handelt es sich um witterungsbeständige, retroreflektierende Folien nach DIN 67520, Retroreflexions-Klasse RA3, Reflexfolien-Aufbau C, die auf der Rückseite mit einem Selbstkleber beschichtet sind. Des Weiteren erfüllen die 3M™ Diamond Grade™ DG³ Reflexfolien Serie 4090 die DIN 6171, Teil 1, Ausgabe 2003 (Aufsichtfarben für Verkehrszeichen) und die DIN 67520 (Lichttechnische Mindestanforderungen an Reflexstoffe mikroprismatischer Materialien).

Die Folien können mit Gummihandroller oder einer Druckwalzen-Verklebemaschine mit einem Anpressdruck von 5 bis 6 bar auf einen Untergrund aufgebracht werden.

Bei den Folien 3M™ Diamond Grade™ DG³ Serie 4090 handelt es sich um mikroprismatische Materialien, d.h. Folien mit Mikroprismen Optik. Die Folien weisen Rückstrahlwerte R_{A} in [cd/l x m²] von 1000 bei einem Beobachtungswinkel von 0,1 bis 45 bei einem Beobachtungswinkel von 1,5° auf. Die Rückstrahlwerte beschreiben das Reflexionsvermögen.

Als Untergrund ist neben Metallen wie Aluminium auch eine Verklebung der Folie mit Kunststoffen möglich.

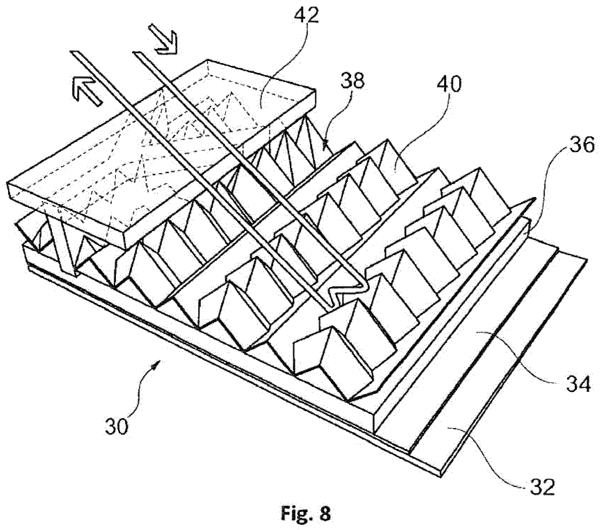

Fig. 8 zeigt eine schematische Darstellung des Schichtaufbaus einer rot-reflektierenden Fluoreszenzfolie **30** für ein erfindungsgemäßes Warndreieck. Die rot-reflektierenden Fluoreszenzfolie **30** umfasst eine Schutzschicht **32** beispielsweise aus Papier, eine Klebschicht 34 aus einem selbstklebenden Klebstoff, eine Trägerschicht **36,** eine Reflexionsschicht **38,** welche in die lichtreflektierenden Elemente **40** eingebettet sind, sowie eine Deckschicht **42,** wobei die Schichten in dieser Reihenfolge von unten nach oben angeordnet sind.

Die Deckschicht **38** der rot-reflektierenden Fluoreszenzfolie **30** ist eine transparente rote und fluoreszierende Deckschicht **42,** wodurch die auf die rot-reflektierenden Fluoreszenzfolie **30** auftreffende Strahlung als rotes Licht aus der rot-reflektierenden Fluoreszenzfolie **30** austritt und die Folie fluoreszierend wird. Um die Fluoreszenz zu erhalten, werden Farbpigmente in die Folie, insbesondere in die Deckschicht eingebracht, die das ansonsten nicht sichtbare UV-Licht für das menschliche Auge sichtbar machen. Der hohe Anteil von UV-Licht bewirkt, dass die mit der Fluoreszenzfolie versehenen Objekte auch bei ungünstigen Sichtverhältnissen, beispielsweise bei Dämmerung, gut zu erkennen sind.

Wie in Fig. 8 durch einen Pfeil für das auf die Reflexionsschicht einfallende Licht und durch einen Pfeil das von der Reflexionsschicht reflektierte Licht dargestellt ist, führt dieser Aufbau der rot-reflektierenden Fluoreszenzfolie dazu, dass die Folie das einfallende Licht als rotes Licht reflektiert. Mit derartigen rot-reflektierenden Fluoreszenzfolien kann ein Reflexionsvermögen von bis zu 300 cd+lx⁻¹+m⁻² erreicht werden, so dass die gesetzlichen Anforderungen erfüllt werden können.

Die Erfindung ist nicht auf die vorstehend beschriebene, rot-reflektierenden Fluoreszenzfolie beschränkt. Beispielsweise kann eine rot-reflektierenden Fluoreszenzfolie verwendet werden, bei der die Licht reflektierenden Elemente verspiegelte Glaskugeln sind, wobei allerdings ein geringeres Reflexionsvermögen von ca. bis 180 cd+lx⁻¹+m⁻²

## Patentansprüche

1. Warndreiecke mit einem Rahmen, der einen horizontalen Schenkel **(4)** und zwei aufrechte Schenkel **(6, 8)** die mit einem Ende an den Enden des horizontalen Schenkels **(4)** angeordnet sind und im aufgestellten Zustand an ihren anderen Enden miteinander verbunden sind, wobei die Schenkel **(4, 6, 8)** vorderseitige Oberflächen **(12, 20)** und rückseitige Oberflächen **(14, 22)** haben und wobei die Schenkel **(4, 6, 8)** wenigsten an ihren vorderseitigen Oberflächen **(12, 20)** reflektierend ausgebildet sind, **dadurch gekennzeichnet, dass** wenigstens auf den vorderseitigen Oberflächen **(12, 20)** der Schenkel **(4, 6, 8)** des Warndreiecks eine rot-reflektierende Fluoreszenzfolie aufgebracht ist.

2. Warndreieck nach Anspruch 1, **dadurch gekennzeichnet, dass** sowohl auf den vorderseitigen Oberflächen **(12, 20)** als auch auf den rückseitige Oberflächen **(14, 22)** der Schenkel **(4, 6, 8)** des Warndreiecks die rot-reflektierende Fluoreszenzfolie aufgebracht ist.

3. Warndreieck nach Anspruch wenigstens einem der Ansprüche 1 bis 2, **dadurch gekennzeichnet, dass** eine oberseitige Oberfläche **(16)** und/oder eine unterseitige Oberfläche **(18)** des horizontalen Schenkels **(4)** mit der rot-reflektierenden Fluoreszenzfolie versehen wird.

4. Warndreieck nach Anspruch 3, **dadurch gekennzeichnet, dass** die oberseitige Oberfläche **(16)** und/oder eine unterseitige Oberfläche **(18)** des horizontalen Schenkels **(4)** als konkave oder konvexe Flächen ausgebildet ist/sind.

5. Warndreieck nach Anspruch 1, **dadurch gekennzeichnet, dass** eine außenseitige Oberfläche **(24)** und/oder eine innenseitige Oberfläche **(26)** der aufrechten Schenkel **(6, 8)** mit der rot-reflektierenden Fluoreszenzfolie versehen sind.

6. Warndreieck nach Anspruch 5, **dadurch gekennzeichnet, dass** die außenseitige Oberfläche **(24)** und/oder eine innenseitige Oberfläche **(26)** der aufrechten Schenkel **(6, 8**) als konkave oder konvexe Flächen ausgebildet ist/sind.

7. Warndreieck nach einem der vorhergehenden Ansprüche, **dadurch gekennzeichnet, dass** die rot-reflektierende Fluoreszenzfolie **(30)** eine Vielzahl von lichtreflektierenden Elementen **(40)** umfasst, die in eine Reflexionsschicht (**38**) eingebettet sind.

8. Warndreieck nach Anspruch 7, **dadurch gekennzeichnet, dass** die lichtreflektierenden Elemente **(40)** verspiegelte Pyramiden sind.

9. Warndreieck nach Anspruch 7 oder **8**, **dadurch gekennzeichnet, dass** die rot-reflektierende Fluoreszenzfolie **(30)** eine transparente rote und fluoreszierende Deckschicht **(42)** aufweist, wodurch die auf die rot-reflektierende Fluoreszenzfolie **(30)** auftreffende Strahlung als rotes Licht aus der rot-reflektierenden Fluoreszenzfolie **(30)** austritt und die Folie fluoreszierend wird.

10. Warndreieck nach einem der Ansprüche 1 bis 9, **dadurch gekennzeichnet, dass** die rot-reflektierende Fluoreszenzfolie ein Reflexionsvermögen von bis zu 180 cd lx⁻¹m⁻², bevorzugt bis zu 300 cd lx⁻¹m⁻² aufweist.

11. Warndreieck nach einem der Ansprüche 1 bis 10, **dadurch gekennzeichnet, dass** die rot-reflektierende Fluoreszenzfolie als reflektierende Elemente Glaskugeln oder Mikroprismen umfasst.
